# EUROPEAN PATENT APPLICATION

(11) **EP 4 517 945 A1**
(43) Date of publication of application: **05.03.2025**
(21) Application number: 23796897.9
(22) Date of filing: 28.04.2023
(51) Int. Cl.: H01M 50/105, B29C 51/08, B29C 53/02, B29C 53/80, B29L 31/00

(54) **POUCH-TYPE BATTERY CASE, POUCH-TYPE SECONDARY BATTERY COMPRISING SAME, METHOD FOR MANUFACTURING POUCH-TYPE BATTERY CASE, AND MOLDING JIG FOR MANUFACTURING POUCH-TYPE BATTERY CASE**

(30) Priority: 29.04.2022 KR 20220053852
(71) Applicant: LG Energy Solution, Ltd., Seoul 07335 (KR)
(72) Inventor: LEE, Chung Hee, Daejeon 34122 (KR); KANG, Tae Won, Daejeon 34122 (KR); HONG, Jeong Woo, Daejeon 34122 (KR)
(74) Representative: Goddar, Heinz J.
(86) International application number: PCT/KR2023/005918
(87) International publication number: WO 2023/211258

(57) **Abstract**

A pouch-type battery case according to an embodiment of the present invention may include: an accommodation part having a recessed shape; a folding part disposed at one side of the accommodation part; and a terrace part expanded around the accommodation part. The folding part may have a stepped portion with respect to the terrace part outward in a direction orthogonal to a longitudinal direction of the folding part. A circumference of the accommodation part may include: a first circumferential portion to which the terrace part is connected; and a second circumferential portion configured to connect both ends of the folding part to the terrace part, wherein a thickness of the second circumferential portion may be less than that of the first circumferential portion.

## Description

### TECHNICAL FIELD

### CROSS-REFERENCE TO RELATED APPLICATION

The present application claims the benefit of the priority of Korean Patent Application Nos. 10-2022-0053852, filed on April 29, 2022, and 10-2023-0056299, filed on April 28, 2023, which are hereby incorporated by reference in their entirety.

### TECHNICAL FIELD

The present invention relates to a pouch-type battery case and a secondary battery including the same, a method for manufacturing the pouch-type battery case, and a forming jig for manufacturing the pouch-type battery case.

### BACKGROUND ART

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In order to manufacture an electrode assembly, a cathode (hereinafter, referred to as a positive electrode), a separator, and an anode (hereinafter, referred to as a negative electrode) are manufactured and stacked. Specifically, positive electrode active material slurry is applied to a positive electrode collector, and negative electrode active material slurry is applied to a negative electrode collector to manufacture a positive electrode and a negative electrode. Also, when the separator is interposed and stacked between the manufactured positive electrode and the manufactured negative electrode, unit cells are formed. The unit cells are stacked on each other to form an electrode assembly. Also, when the electrode assembly is accommodated in a specific case, and an electrolyte is injected, the secondary battery is manufactured.

Such a secondary battery is classified into a pouch-type secondary battery and a can type secondary battery according to a material of a battery case accommodating an electrode assembly. In the pouch-type secondary battery, the electrode assembly is accommodated in a pouch made of a flexible polymer material having a variable shape. Also, in the can type secondary battery, an electrode assembly is accommodated in a case made of a metal or plastic material having a predetermined shape.

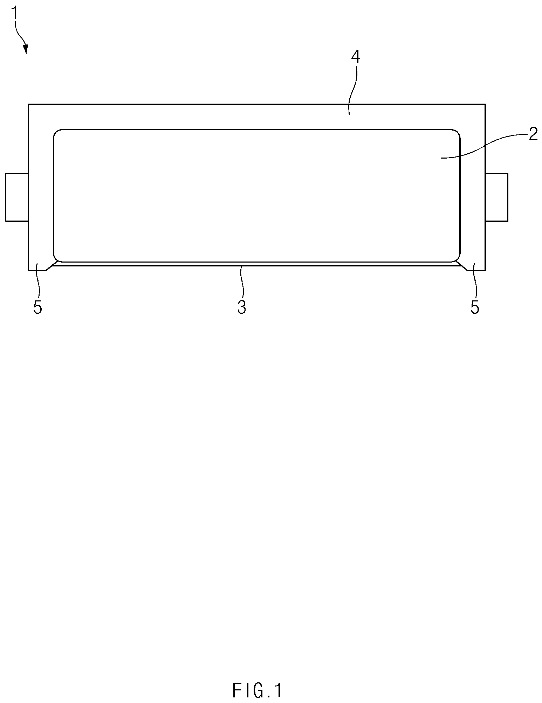

FIG. 1 is a front view of a pouch-type secondary battery according to a related art.

A pouch-type secondary battery according to the related art includes an electrode assembly and a pouch-type battery case 1 in which the electrode assembly is accommodated. The pouch-type battery case 1 is manufactured by drawing and forming a pouch film having flexibility to form an accommodation part 2. The drawing-forming is performed by inserting a pouch film into a press and applying a pressure to the pouch film through a punch to stretch the pouch film. When the accommodation part 2 is formed, the electrode assembly is accommodated in an accommodation space of the accommodation part 2, the pouch-type battery case 1 is folded, and then, a terrace part 4 is sealed to manufacture a secondary battery.

In addition, when the battery case 1 is folded, a folding part 3 formed at one side of the accommodation part 2 forms one corner of the secondary battery, and the folding part 3 does not need to be sealed. Thus, since there is no need to seal all four corners of the secondary battery, a sealing process speed may be improved, and the number of trimming processes may be reduced.

However, in the case of the secondary battery according to the related art, the folded portion of the terrace part 4 may protrude outward from the folding part 3 and may be referred to as a bat ear 2.

Since the bat ear 2 occupies an unnecessary volume, it is not easy to assemble secondary batteries 1a into a battery module or the like, and there is a problem in that an energy density versus volume of the secondary battery decreases. In addition, there is a problem in that quality of an outer appearance of the pouch-type battery case 1 is deteriorated.

### DISCLOSURE OF THE INVENTION

### TECHNICAL PROBLEM

An object of the prevent invention for solving the above problems is to provide a pouch-type battery case having improved appearance quality and no bat ear, and pouch-type secondary battery including the same.

Another object of the prevent invention for solving the above problems is to provide a method for manufacturing a pouch-type battery case and a forming jig used therefor.

### TECHNICAL SOLUTION

A pouch-type battery case according to an embodiment of the present invention may include: an accommodation part having a recessed shape; a folding part disposed at one side of the accommodation part; and a terrace part expanded around the accommodation part. The folding part may have a stepped portion with respect to the terrace part outward in a direction orthogonal to a longitudinal direction of the folding part. A circumference of the accommodation part may include: a first circumferential portion to which the terrace part is connected; and a second circumferential portion configured to connect both ends of the folding part to the terrace part. A thickness of the second circumferential portion may be less than that of the first circumferential portion.

One pair of four corners of the accommodation part may be disposed on the first circumferential portion, and the other pair may be disposed on the second circumferential portion.

The folding part may be tightly unfolded.

A pouch-type secondary battery according to an embodiment of the present invention may include an electrode assembly and a pouch-type battery case. The pouch-type battery case may include: an accommodation part in which the electrode assembly is accommodated; a folding part disposed at one side of the electrode assembly; and a terrace part expanded around the accommodation part. The folding part may have a stepped portion with respect to the terrace part outward in a direction orthogonal to a longitudinal direction of the folding part. A circumference of the accommodation part may include: a first circumferential portion to which the terrace part is connected; and a second circumferential portion configured to connect both ends of the folding part to the terrace part. A thickness of the second circumferential portion may be less than that of the first circumferential portion.

A method for manufacturing a pouch-type battery case according to an embodiment of the present invention may include: forming an accommodation part in a pouch film; folding a folding part of the pouch film; inserting a forming jig into the accommodation part; and allowing the forming jig to press the folding part outward so that the accommodation part increases in width or length.

The inserting of the forming jig into the accommodation part may include: unfolding the folding part so that a portion and the other portion of the pouch film are angled at a preset angle; inserting the forming jig between the portion and the other portion of the pouch film; and folding the folding part.

The method may further include separating the forming jig from the accommodation part.

A forming jig according to an embodiment of the present invention may be provided for manufacturing a pouch-type battery case provided with a folding part at one side of an accommodation part. The forming jig may include: a jig body inserted into the accommodation part to press the folding part; and a protrusion connected to the jig body to protrude to the outside of the accommodation part and having a thickness less than that of the jig body.

A pressing direction of the jig body may be orthogonal to a longitudinal direction of the folding part.

A length of the jig body may correspond to a length of the folding part.

A thickness of the jig body may correspond to a total depth of the accommodation part or correspond to a sum of the total depth of the accommodation part and the thickness of the protrusion.

The protrusion may protrude from the jig body in a direction away from the folding part.

The protrusion may be connected to a driving part configured to provide linear power to the forming jig.

### ADVANTAGEOUS EFFECTS

According to a preferred embodiment of the present invention, since the bat ear is not formed unlike the secondary battery according to the related art, the energy density of the secondary battery may increase, and the appearance quality may be improved.

In addition, since the bat ear is not formed, when the battery module including the plurality of secondary batteries is manufactured, the alignment between the plurality of secondary batteries may be improved.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a front view of a pouch-type secondary battery according to a related art.
FIG. 2 is a flowchart illustrating a method for manufacturing a pouch-type battery case according to an embodiment of the present invention.
FIG. 3 is a perspective view of a pouch film in which an accommodation part is formed.
FIGS. 4 to 8 are side views for explaining the method for manufacturing the pouch-type battery case according to an embodiment of the present invention.
FIG. 9 is a front view of a forming jig illustrated in FIGS. 4 to 8.
FIG. 10 is a front view illustrating a pouch-type secondary battery according to another embodiment of the present invention.
FIG. 11 is a cross-sectional view illustrating the inside of an accommodation part illustrated in FIG. 10.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

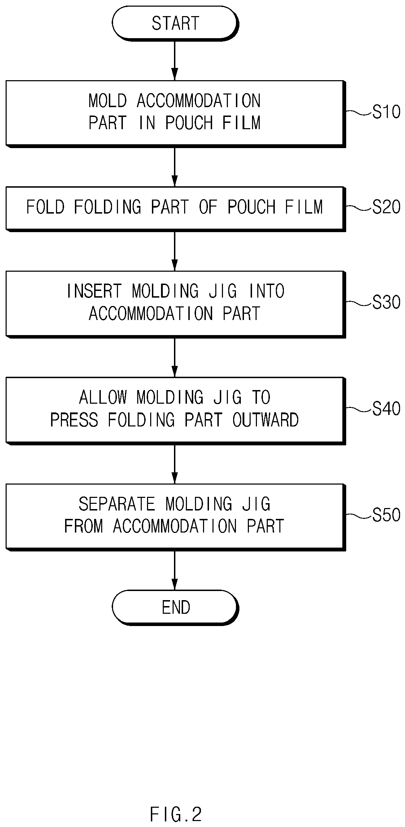

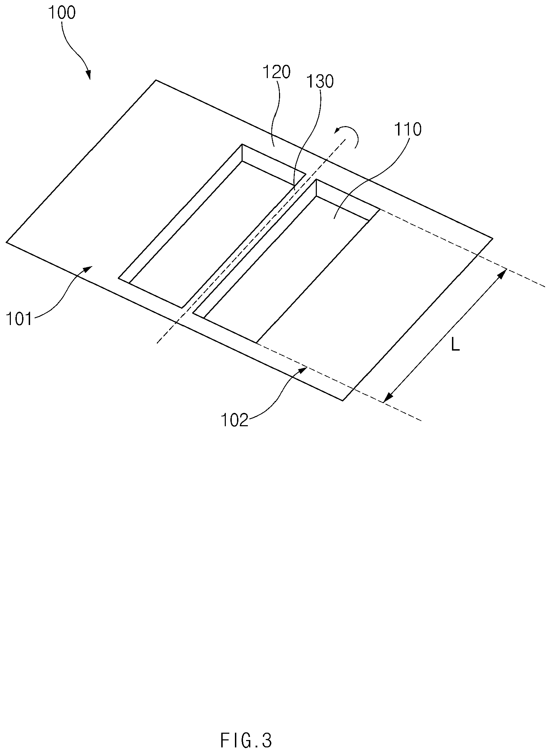

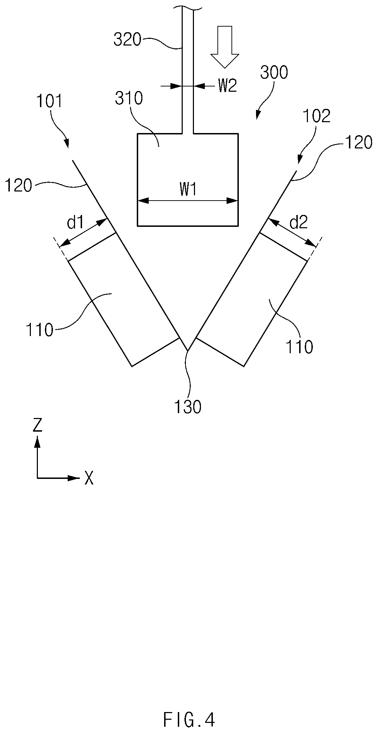

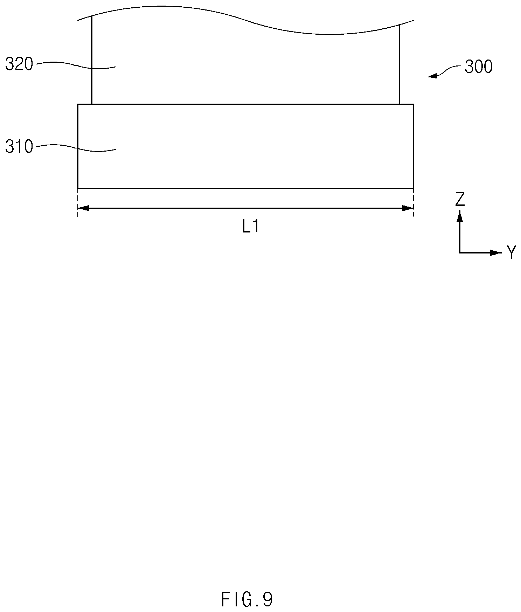

FIG. 2 is a flowchart illustrating a method for manufacturing a pouch-type battery case according to an embodiment of the present invention, FIG. 3 is a perspective view of a pouch film in which an accommodation part is formed, FIGS. 4 to 8 are side views for explaining the method for manufacturing the pouch-type battery case according to an embodiment of the present invention, and FIG. 9 is a front view of a forming jig illustrated in FIGS. 4 to 8.

A method for manufacturing a pouch-type battery case (hereinafter, referred to as a 'manufacturing method') according to an embodiment of the present invention may include a process (S10) of forming an accommodation part 110 in a pouch film 100, a process (S20) of folding a folding part 130 of the pouch film 100, a process (S30) of inserting a forming jig 300 into the accommodation part 110, and a process (S40) of allowing the forming jig 300 to press the folding part 130 outward.

The process (S10) of forming the accommodation part 110 in the pouch film 100may be performed by a press device. The press device may include a die having a forming groove and a punch facing the forming groove. In a state in which the pouch film 100 is positioned between the die and the punch, the punch may press and stretch a portion of the pouch film 100 so that the portion of the pouch film 100 is inserted into the forming groove. As a result, the accommodation part 110 that is recessed in a shape corresponding to a shape of the forming groove may be formed in the pouch film 100. The accommodation part 110 may form an accommodation space for accommodating an electrode assembly. Since a configuration and operation of the press device are well-known techniques, those skilled in the art may easily understand the configuration and operation of the press device.

The pouch film 100 may be a laminate sheet including a first resin layer, a metal layer, and a second resin layer. For example, the first resin layer may include a polypropylene (PP) material or a polyethylene (PE) material, the metal layer may include an aluminum (AL) material, and the second resin layer may include a polyethylene terephthalate (PET) material.

Referring to FIG. 3, the accommodation part 110 formed in the pouch film 100 may have a recessed shape. A pair of accommodation parts 110 connected to each other by the folding part 130 may be provided. The pair of accommodation parts 110 may have the same depth as each other, but is not limited thereto.

The pair of accommodation parts 110 may be disposed at both sides of the folding part 130, respectively. Hereinafter, as illustrated in FIG. 3, a case in which the folding part 130 extends parallel to a longitudinal direction of the accommodation part 110 will be described as an example. However, it is not limited thereto, and it is also possible for the folding part 130 to extend parallel to a width direction of the accommodation part 110.

A region of the pouch film 100, in which the accommodation part 110 is not formed, may form a terrace part 120. The terrace part 120 may be connected to a circumference of the accommodation part 110 and may have a shape expanded around the accommodation part 110.

The pouch film 100 may be divided into a first part 101 and a second part 102, based on a line parallel to the folding part 130. The first part 101 may be a portion of the pouch film 100, and the second part 102 may be the other portion of the pouch film 100. The first part 101 and the second part 102 may each include the accommodation part 110 and the terrace part 120.

However, it is not limited thereto, and it is also possible that only one accommodation part 110 is formed in the pouch film 110. In this case, one of the first part 101 and the second part 102 may include the accommodation part 110 and the terrace part 120, and the other may be formed to be flat.

Thereafter, the folding part 130 of the pouch film 100 may be folded (S20). In more detail, the folding part 130 may be folded so that the first part 101 and the second part 102 are close to each other. The process (S20) of folding the folding part 130 may be performed by a folding device, and since a configuration and operation of the folding device are well-known techniques, a detailed description thereof will be omitted.

When the folding part 130 is completely folded, the accommodation part 110 of the first part 101 and the accommodation part 110 of the second part 102 may face each other, and the terrace part 120 of the first part 101 and the terrace part 120 of the second part 102 may be in contact with each other.

If only a single accommodation part 110 is formed in the pouch film 110, when the folding part 130 is completely folded, one of the first part 101 and the second part 102, which does not include the accommodation part 110, may cover the accommodation part 110 and the terrace part 120 of the other of the first part 101 and the second part 102.

Hereinafter, before explaining the process (S30) of inserting the forming jig 300 into the accommodation part 110 and the process (S40) of allowing the forming jig 300 to press the folding part 130 outward, the forming jig 300 according to an embodiment of the present invention will be described with reference to FIGS. 4 to 9.

The forming jig 300 according to an embodiment of the present invention includes a jig body 310 inserted into the accommodation part 110 to press the folding part 130 and a protrusion 320 connected to the jig body 310 to protrude to the outside of the accommodation part 110.

The jig body 310 may press the folding part 130 and a peripheral portion of the folding part 130 outward in the accommodation part 110. The peripheral portion may be a portion connected to the folding part 130 of an inner circumference of the accommodation part 110. That is, the jig body 310 may press a portion of the inner circumference of the accommodation part 110, which is connected to the folding part 130, together with the folding part 130.

A pressing direction of the jig body 310 may be orthogonal to the longitudinal direction of the folding part 130. That is, the jig body 310 may press the folding part 130 and a peripheral portion of the folding part 130 in an opposite direction to a z-axis illustrated in the drawing. For example, the pressing direction of the jig body 310 may be parallel to a width direction of the accommodation part 110.

The jig body 310 may extend parallel to the folding part 130. A length of the jig body 310 may be parallel to a y-axis illustrated in the drawing.

A length L1 (see FIG. 9) of the jig body 310 may correspond to a length L of the folding part 130 (see FIG. 3). The length L1 of the jig body 310 may be equal to or slightly shorter than the length L of the folding part 130. As a result, the jig body 310 may uniformly press the folding part 130 and the peripheral portion of the folding part 130 as a whole.

In the state in which the folding part 130 is folded, the jig body 310 may have a predetermined thickness with respect to a depth direction of the accommodation part 110. That is, a thickness of the jig body 310 may be parallel to the x-axis illustrated in the drawing.

A thickness t1 (see FIG. 4) of the jig body 310 may correspond to the total depth of the accommodation part 110. That is, the thickness t1 of the jig body 310 may be the same as or similar to the total depth of the accommodation part 110. For example, the thickness t1 of the jig body 310 may correspond to the sum of a depth d1 of the accommodation part 110 of the first part 101 and a depth d2 of the accommodation part 110 of the second part 102. The thickness t1 of the jig body 310 may be the same as or similar to the total depth of the accommodation part 110.

Preferably, the thickness t1 of the jig body 310 may correspond to a value obtained by adding a thickness t2 of the protrusion 320 to be described later to the total depth of the accommodation part 110. That is, the thickness t1 of the jig body 310 may be equal to or similar to a value obtained by adding the thickness t2 of the protrusion 320 to be described later to the total depth of the accommodation part 110. For example, the thickness t1 of the jig body 310 may correspond to the sum of the depth d1 of the accommodation part 110 of the first part 101, the depth d2 of the accommodation part 110 of the second part 102, and the thickness t2 of the protrusion 320.

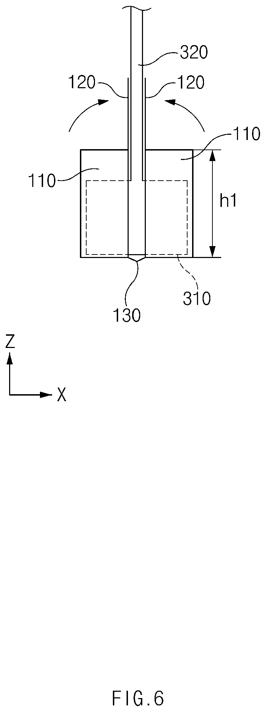

As illustrated in FIG. 6, this is because, when the jig body 310 presses, the first part 101 and the second part 102 of the pouch film 100 are not in completely close contact with the thickness t2 of the protrusion 320.

As a result, the jig body 310 may more uniformly press the folding part 130 and the peripheral portion of the folding part 130 as a whole.

The protrusion 320 may protrude from the jig body 310. In more detail, the protrusion 320 may protrude from the jig body 310 in a direction away from the folding part 130.

In the state in which the jig body 310 is accommodated in the accommodation part 110, the protrusion 320 may extend outward through a gap between the first part 101 and the second part 102 of the pouch film 100.

The protrusion 320 may be integrally formed with the jig body 310, but is not limited thereto.

The protrusion 320 may be connected to a driving part (not shown) that provides linear power to the forming jig 300. For example, the driving part may include a linear actuator. Thus, the driving part may move the forming jig 300 and provide pressing force to the jig body 310 through the protrusion 320.

The thickness t2 of the protrusion 320 may be less than the thickness t1 of the jig body 310. Thus, in the state in which the folding part 130 of the pouch film 100 is folded, the protrusion 320 may smoothly extend into the narrow gap between the first part 101 and the second part 102.

Hereinafter, the process (30) of inserting the forming jig 300 into the accommodation part 110 and the process (S40) of allowing the forming jig 300 to press the folding part 130 outward will be described based on the description of the forming jig 300.

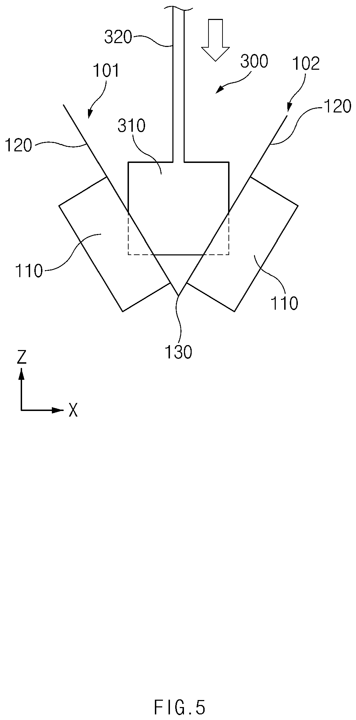

The process (S30) of inserting the forming jig 300 into the accommodation part 110 may include a process (see FIG. 4) of unfolding the folding part 130 so that the first part 101 and the second part 102 of the pouch film 100 are angled at a preset angle, a process (see FIG. 5) of inserting the forming jig 300 between the first part 101 and the second part 102 of the pouch film 100, and a process (see FIG. 6) of folding the folding part 130.

As illustrated in FIGS. 4 and 5, the folding part 130 of the pouch film 100 may be unfolded so that the first part 101 and the second part 102 are angled at the preset angle, and the forming jig 300 may move toward the folding part 130 and be inserted between the first part 101 and the second part 102 of the pouch film 100. Thus, the jig body 310 of the forming jig 300 may be smoothly inserted into the accommodation part 110 without interfering with the pouch film 100.

Then, as illustrated in FIG. 6, the folding part 130 may be folded so that the jig body 310 is accommodated in the accommodation part 110. Here, the protrusion 320 of the forming jig 300 may extend outward through the gap between the first part 101 and the second part 102 of the pouch film 100. In more detail, the protrusion 320 may extend between the terrace part 120 of the first part 101 and the terrace part 120 of the second part 102.

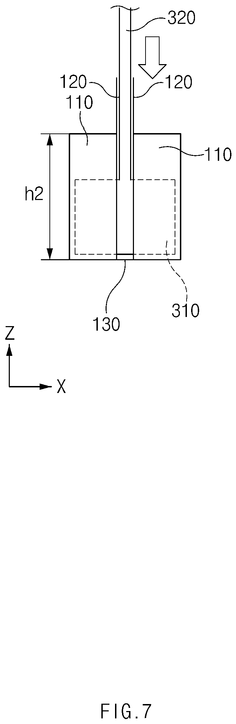

Then, as illustrated in FIG. 7, the forming jig 300 may press the folding part 130 outward (S40). When the pouch film 100 is fixed, the forming jig 300 may move toward the folding part 130 by a predetermined distance, and thus, the forming jig 300 may press the folding part 130 outward.

In more detail, the jig body 310 may press the folding part 130 and the peripheral portion of the folding part 130 outward. The jig body 310 may press the folding part 130 and the peripheral portion of the folding part 130 in a direction perpendicular to a longitudinal direction of the folding part 130.

For example, the jig body 310 may press the folding part 130 and the peripheral portion of the folding part 130 in a direction parallel to the width direction of the accommodation part 110. In this case, the pouch film 100 may be stretched by the pressing of the forming jig 300, and thus, the width of the accommodation part 110 may increase. In more detail, the accommodation part 110 before pressing of the forming jig 300 may have a first width W1, and the accommodation part 110 after pressing of the forming jig 300 may have a second width W2 greater than the first width W1. That is, the forming jig 300 may form the pouch film 100 so that the width of the accommodation part 310 increases.

However, this embodiment is not limited thereto. When the folding part 130 is formed parallel to the width of the accommodation part 110, the jig body 310 may press the folding part 130 and the peripheral portion of the folding part 130 in the direction parallel to the longitudinal direction of the accommodation part 110. In this case, the forming jig 300 may form the pouch film 100 so that the length of the accommodation part 310 increases.

Since the folding part 130 and the peripheral portion of the folding part 130 protrude outward from the terrace part 120, more specifically, the folded portion of the terrace part 120, unlike the secondary battery according to the related art, the bat ear 5 (see FIG. 1) may not occur, and the folding part 130 and the peripheral portion of the folding part 130 may be tightly unfolded to remove wrinkles. Thus, the outer appearance of the secondary battery may be improved, and the quality may be improved.

FIG. 2 illustrates that the process (S30) of inserting the forming jig 130 into the accommodation part 110 is performed after the process (S20) of folding the folding part 130, but is not limited thereto.

For example, in the state in which the jig body 310 of the forming jig 300 is disposed between the first part 101 and the second part 102 of the pouch film 100, the folding part 130 may be folded so that the jig body 310 is inserted into the accommodation part 110. That is, the process (S20) of folding the folding part 130 and the process (S30) of inserting the forming jig 130 into the accommodation part 110 may be performed at the same time.

In this case, since a process of unfolding the folding part 130 is unnecessary to insert the forming jig 300 into the accommodation part 110, there is an advantage in simplifying the manufacturing process.

The manufacturing method may further include a process (S50) of separating the forming jig 300 from the accommodation part 110.

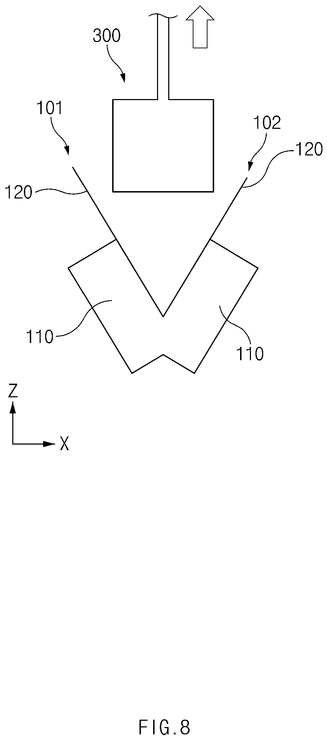

As illustrated in FIG. 8, the pouch film 100 may be unfolded so that the first part 101 and the second part 102 are angled at the preset angle, and the forming jig 300 may move in a direction away from the folding part 130 and be separated between the first part 101 and the second part 102 of the pouch film 100. Thus, the forming jig 300, more specifically, the jig body 310 may be smoothly separated from the accommodation part 110 without interfering with the pouch film 100.

As a result, the pouch-type battery case may be manufactured. Hereinafter, for convenience of explanation, the reference numeral of the pouch-type battery case is indicated as '100' that is the same as that of the pouch film 100.

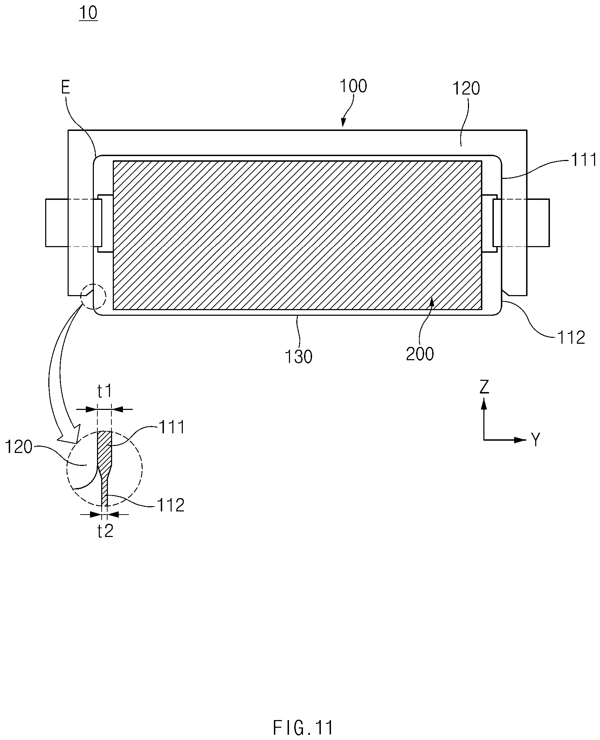

Then, an electrode assembly 200 (see FIG. 11) may be inserted into the accommodation part 110 of the pouch-type battery case 100, and the terrace parts 120 of the first part 101 and the second part 102 may be sealed to each other to form a sealing part, thereby manufacturing the pouch-type secondary battery 10.

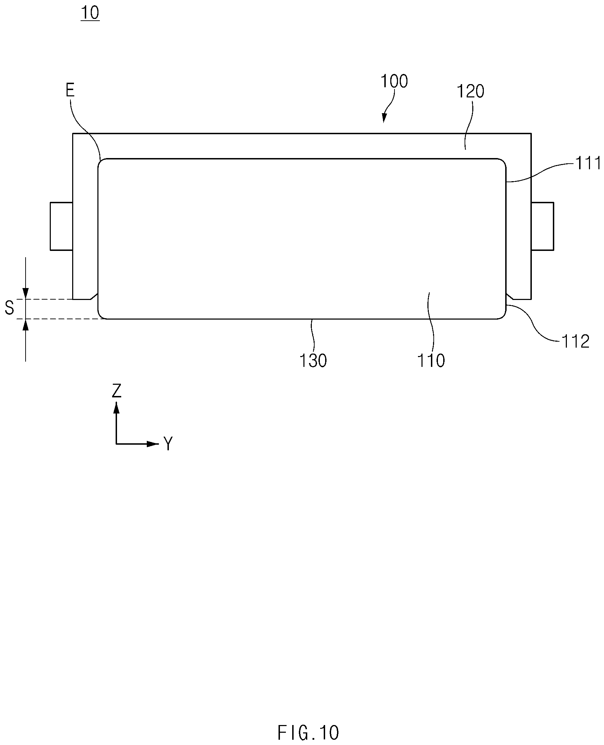

FIG. 10 is a front view illustrating a pouch-type secondary battery according to another embodiment of the present invention, and FIG. 11 is a cross-sectional view illustrating the inside of an accommodation part illustrated in FIG. 10.

Hereinafter, a pouch-type battery case 100 (hereinafter, referred to as a 'battery case') manufactured by the above-described manufacturing method and a pouch-type secondary battery 10 (hereinafter, referred to as a 'secondary battery') including the battery case 100 will be described as another embodiment of the present invention.

The secondary battery 10 may include an electrode assembly 200 and a battery case 100.

The electrode assembly 200 may include a positive electrode, a negative electrode, and a separator interposed between the positive electrode plate and the negative electrode plate to insulate the positive electrode plate and the negative electrode plate from each other.

The type of electrode assembly 200 is not limited. For example, the electrode assembly 200 may be a stack type electrode assembly in which positive and negative electrodes are alternately stacked with a separator therebetween. As another example, the electrode assembly 200 may be a jelly roll-type electrode assembly in which sheet-shaped positive and negative electrodes are wound together with a separator therebetween.

The electrode assembly 200 may be provided with an electrode tab protruding in a full-length direction. The electrode tab may be provided in a pair, and the pair of electrode tabs may include a positive electrode tab connected to the positive electrode and a negative electrode tab connected to the negative electrode. As illustrated in FIGS. 10 and 11, the positive and negative tabs may protrude in opposite directions from both ends of the electrode assembly 200, respectively. However, it is not limited thereto, and it is also possible that the positive electrode tab and the negative electrode tab protrude parallel to each other from one end of the electrode assembly 200.

An electrode lead 210 may be connected to the electrode tab. For example, the electrode lead 210 may be welded to the electrode tab. The electrode lead 210 may be provided in a pair, and the pair of electrode leads 210 may include a positive electrode lead connected to the positive electrode tab and a negative electrode lead connected to the negative electrode tab.

An insulating film (not shown) may be provided around the electrode lead 210, and a portion of the sealing part of the battery case 100 may be sealed with the insulating film.

The battery case 100 may include an accommodation part 110, a terrace part 120, and a folding part 130.

The accommodation part 110 may have a recessed shape and may accommodate the electrode assembly 200.

The folding part 130 may be disposed at one side of the accommodation part 110. In more detail, the folding part 130 may be disposed at a portion of the circumference of the accommodation part 110. The folding part 130 may extend parallel to a longitudinal direction or a width direction of the accommodation part 110.

The terrace part 120 may be connected to a circumference of the accommodation part 110. The terrace part 120 may be expanded around the accommodation part 110. Both ends of the terrace part 120 may be folded portions. The sealing portion sealed by heat and/or pressure may be formed on the terrace part 120. An inner space of the accommodation part 110 may be sealed by the sealing part.

As described above, in the process of manufacturing the battery case 100, the folding part 130 and a peripheral portion of the folding part 130 may be pressed by a forming jig 300. Thus, the folding part 130 may have a predetermined stepped portion S with respect to the terrace part 120 outward in a direction orthogonal to a length direction thereof. In more detail, the folding part 130 may have a predetermined stepped portion S with respect to the folded portion of the terrace part 120 outward in a direction orthogonal to a longitudinal direction thereof.

For example, the folding part 130 may extend in the longitudinal direction of the accommodation part 110 and have the predetermined stepped portion S with respect to the terrace part 120 outward in the width direction of the accommodation part 110.

As a result, since a bat ear is not formed in the secondary battery 1 unlike the secondary battery according to the related art, an energy density of the secondary battery 1 may increase, and quality of an outer appearance may be improved.

Also, since the folding part 130 is pressed by a forming jig 300, the folding part 130 may be tightly unfolded. As a result, wrinkles on the outer appearance of the secondary battery 10 may be reduced, and the quality of the outer appearance may be further improved.

A circumference of the accommodation part 110 may include a first circumferential portion 111 to which the terrace part 120 is connected, and a second circumferential portion 112 connecting both ends of the folding part 130 to the terrace part 120. The second circumferential portion 112 may be a portion corresponding to the stepped portion S.

The accommodation part 110 may have four corners E connecting long and short sides to each other. One pair of the four corners E of the accommodation part 110 may be disposed on a first circumferential portion 111, and the other pair may be disposed on a second circumferential portion 112. Thus, since the pair of corner portions E of the accommodation part 110 protrude outward from a folded portion of the terrace part 120, a bat ear may not be formed.

A thickness t12 of the second circumferential portion 112 may be less than a thickness t11 of the first circumferential portion 111. This is because, while the folding part 130 is pressed by the forming jig 300, a portion adjacent to each of both ends of the folding part 130 of the circumference of the accommodation part 110 is stretched more than the far portion. That is, a remaining thickness t12 of the second circumferential portion 112 may be less than a remaining thickness t11 of the first circumferential portion 111.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

### [Description of the Symbols]

| | | | |
|---|---|---|---|
| 10: | Pouch-type secondarybattery | 100: | Pouch film, Pouch-type battery case |
| 101: | First part | 102: | Second part |
| 110: | Accommodation part | 111: | First circumferential portion |
| 112: | Second circumferential portion | 120: | Terrace part |
| 130: | Folding part | 200: | Electrode assembly |
| 210: | Electrode lead | 300: | Forming jig |
| 310: | Jig body | 320: | Protrusion |

## Claims

1. A pouch-type battery case comprising:
an accommodation part having a recessed shape;
a folding part disposed at one side of the accommodation part; and
a terrace part expanded around the accommodation part,
wherein the folding part has a stepped portion with respect to the terrace part outward in a direction orthogonal to a longitudinal direction of the folding part, and
a circumference of the accommodation part comprises:
a first circumferential portion to which the terrace part is connected; and
a second circumferential portion connecting both ends of the folding part to the terrace part,
wherein a thickness of the second circumferential portion is less than that of the first circumferential portion.

2. The pouch-type battery case of claim 1, wherein one pair of four corners of the accommodation part are disposed on the first circumferential portion, and the other pair are disposed on the second circumferential portion.

3. The pouch-type battery case of claim 1, wherein the folding part is tightly unfolded.

4. A pouch-type secondary battery comprising an electrode assembly and a pouch-type battery case,
wherein the pouch-type battery case comprises:
an accommodation part in which the electrode assembly is accommodated;
a folding part disposed at one side of the electrode assembly; and
a terrace part expanded around the accommodation part,
wherein the folding part has a stepped portion with respect to the terrace part outward in a direction orthogonal to a longitudinal direction of the folding part, and
a circumference of the accommodation part comprises:
a first circumferential portion to which the terrace part is connected; and
a second circumferential portion connecting both ends of the folding part to the terrace part,
wherein a thickness of the second circumferential portion is less than that of the first circumferential portion.

5. A method for manufacturing a pouch-type battery case, the method comprising:
forming an accommodation part in a pouch film;
folding a folding part of the pouch film;
inserting a forming jig into the accommodation part; and
allowing the forming jig to press the folding part outward so that the accommodation part increases in width or length.

6. The method of claim 5, wherein the inserting of the forming jig into the accommodation part comprises:
unfolding the folding part so that a portion and the other portion of the pouch film are angled at a preset angle;
inserting the forming jig between the portion and the other portion of the pouch film; and
folding the folding part.

7. The method of claim 5, further comprising separating the forming jig from the accommodation part.

8. A forming jig for manufacturing a pouch-type battery case provided with a folding part at one side of an accommodation part, the forming jig comprising:
a jig body inserted into the accommodation part to press the folding part; and
a protrusion connected to the jig body to protrude to the outside of the accommodation part and having a thickness less than that of the jig body.

9. The forming jig of claim 8, wherein a pressing direction of the jig body is orthogonal to a longitudinal direction of the folding part.

10. The forming jig of claim 8, wherein a length of the jig body corresponds to a length of the folding part.

11. The forming jig of claim 8, wherein a thickness of the jig body corresponds to a total depth of the accommodation part or corresponds to a sum of the total depth of the accommodation part and the thickness of the protrusion.

12. The forming jig of claim 8, wherein the protrusion protrudes from the jig body in a direction away from the folding part.

13. The forming jig of claim 8, wherein the protrusion is connected to a driving part configured to provide linear power to the forming jig.
